# FASCICULE DE BREVET EUROPEEN

(11) **EP 1 910 741 B1**
(45) Date de publication et mention de la délivrance du brevet: **15.11.2017**
(21) Numéro de dépôt: 05797394.3
(22) Date de dépôt: 01.08.2005
(51) Int. Cl.: F23C 10/10

(54) **REACTEUR A LIT FLUIDISE MODULAIRE**
MODULARER WIRBELBETTREAKTOR
MODULAR FLUIDISED BED REACTOR

(43) Date de publication de la demande: 16.04.2008
(73) Titulaire: General Electric Technology GmbH, 5400 Baden (CH)
(72) Inventeur: MORIN, Jean-xavier, F-45170 NEUVILLE AUX BOIS (FR); BEAL, Corinne, F-78690 VOISINS LE BRETONNEUX (FR); LASCOMBES, Jean-Luc, F-94100 ST MAUR DES FOSSES (FR)
(74) Mandataire: General Electric Technology GmbH
(86) Numéro de dépôt international: PCT/FR2005/050639
(87) Numéro de publication internationale: WO 2007/014984

(56) Documents cités:
- EP-A- 1 308 671
- WO-A-2004/036118
- FR-A- 2 814 533
- FR-A- 2 850 156
- FR-A- 2 873 790
- US-A- 3 708 552
- US-B1- 6 481 385

## Description

La présente invention concerne les réacteurs à lit fluidisé circulant de réaction de gaz solides et de production d'énergie et les chaudières.

Ces réacteurs comprennent une chambre de réaction où ont lieu les réactions gaz solides, un séparateur centrifuge avec des moyens de recirculation de solides en bas de la chambre de réaction et typiquement un échangeur de chaleur ou un moyen de réglage de la température de la chambre de réaction.

Pour simplifier, on ne décrira dans l'état de la technique de la présente demande que le cas de la chaudière à lit fluidisé circulant.

Les chaudières comprennent un foyer où est brûlé le combustible, un séparateur centrifuge avec des moyens de recirculation de solides en bas du foyer et au moins un échangeur de chaleur de réglage de la température de la chambre de réaction.

Le contrôle des émissions de gaz à effet de serre, comme par exemple le CO₂ est une contrainte technique incontournable pour les centrales de production d'énergie utilisant des combustibles fossiles. Ce contrôle amène à devoir résoudre à coût et impact minimum de nouveaux problèmes comme celui de la capture de CO₂ dans les fumées de centrales ou comme celui de l'utilisation d'énergies renouvelables de type biomasse (carbone non fossile).

Enfin la raréfaction progressive des gisements pétroliers crée une dynamique pour mettre en oeuvre à grande échelle des techniques de récupération assistées par injection de CO₂, capables de plus que doubler certaines réserves accessibles.

Il est connu de convertir par combustion en cycle thermochimique des combustibles solides contenant des matières carbonées afin de produire des fumées de combustion contenant principalement CO₂ et H₂O sans ballast azote afin de pouvoir utiliser ces fumées en récupération assistée de pétrole ou de pouvoir les séquestrer en sous sol, comme envisagé dans les techniques de réduction des émissions de gaz à effet de serre.

Dans cette approche, il n'est pas besoin de recourir à une unité spécifique de distillation d'air, pour produire de l'oxygène, pénalisante en énergie électrique consommée.

Cette conversion est assurée par deux réacteurs à lit fluidisé circulant: un réacteur d'oxydation et un réacteur de conversion qui sont interconnectés pour assurer l'échange des oxydes métalliques solides servant de porteurs d'oxygène, et qui sont successivement réduits puis oxydés en boucle.

Cette interconnexion constitue une contrainte très forte dans l'arrangement des deux réacteurs dont la taille respective diffère dans un ratio de 1 à 3 voire 1 à 4 résultant de la séparation du diluant azote, aussi appelé "ballast azote", et d'un recyclage CO₂ / H₂O / SO₂ dans le réacteur de conversion. Chaque réacteur comporte en fait trois éléments pour assurer son fonctionnement : un réacteur proprement dit ou chambre de réaction, un cyclone ou séparateur associé à un siphon et une chaudière arrière dite aussi cage arrière, devant être combinés réciproquement, à quoi sont ajoutés des lits extérieurs sur le réacteur d'oxydation et un séparateur trieur de carbone, aussi appelé "carbon stripper", sur le retour de solides du réacteur de conversion vers le réacteur d'oxydation.

Il est par ailleurs nécessaire de disposer d'un concept qui soit extrapolable à de grandes tailles, de 20 à 400 MWe environ, et qui minimise les gaines d'interconnections de solides entre les deux réacteurs.

Enfin, il faut souligner la contrainte introduite par l'emploi massif de réfractaires puisque de façon conventionnelle le réacteur de conversion est entièrement recouvert de matériaux réfractaires ou "réfractorisé" sur sa boucle (réacteur, gaine, cyclone, siphon) tandis que le réacteur de conversion est lui réfractorisé en partie basse et sur les éléments gaine, cyclone, siphon. Ces éléments de boucles sont tôlés et protégés par 400 à 500 mm de réfractaires multicouches. Ceci amène à des frais de maintenance élevés et à des contraintes opératoires de démarrage et d'arrêt plus lents pour s'accommoder de ces fortes épaisseurs à gradient thermique limité.

Il apparaît compte tenu des contraintes ci-dessus que l'obtention d'une telle chaudière avec un arrangement intégré, compact et extrapolable assurant les fonctions désirées constitue un véritable problème à résoudre.

La présente demande constitue également un perfectionnement de la demande PCT WO 2004/036118 du demandeur. Cette demande décrivait notamment un module de base constitué d'une chambre de réaction ou réacteur, d'un séparateur et d'une cage arrière, la chambre de réaction et le séparateur ayant des parois rectilignes.

Classiquement la chambre de réaction est placée devant le séparateur lui même placé devant la cage arrière. Cette solution est en effet la plus logique puisque les fumées produites par la chambre de réaction vont dans le séparateur, les particules retournent vers la chambre tandis que le reste des fumées est traitées dans la cage arrière. Le séparateur est placé au centre entre la chambre de réaction et la cage arrière, ce qui minimise les gaines de liaison entre ces éléments.

L'objet de la présente invention est de proposer une configuration à la fois compacte, modulaire et particulièrement adaptée à la construction d'une double chaudière à lits fluidisés circulant interconnectés pour assurer l'échange des oxydes porteurs d'oxygène qui sont successivement réduits puis oxydés en boucle afin de capturer le CO₂.

Le réacteur à lit fluidisé circulant selon l'invention est décrit par l'objet de la revendication 1. L'avantage de cette disposition par rapport à celle habituellement utilisée est de pouvoir positionner le séparateur de chacun des modules à côté de la chambre de réaction de l'autre module, ce qui peut être intéressant dans certaines configurations où des particules passent d'une chambre de réaction à l'autre par l'intermédiaire du séparateur, la cage arrière peut alors être commune. La combinaison d'un module classique avec séparateur central et un module avec réacteur central où le séparateur de chacun des premier et deuxième modules est positionné à côté de la chambre de réaction de l'autre module permet de réduire la distance entre les séparateurs et les chambres de réaction et donc éventuellement la longueur des conduits entre ces différents éléments. Le nombre de module à utiliser est calculé en fonction de la puissance souhaitée.

Selon une disposition particulière, la gaine d'accélération est disposée au moins en partie dans le haut de la chambre de réaction et le séparateur centrifuge présente des parois verticales sensiblement rectilignes. La position de la gaine d'accélération des particules dans la chambre de réaction permet de rapprocher voire d'avoir une paroi commune entre ladite chambre et le séparateur et gagner ainsi en volume. Le fait que la gaine est intégrée au moins en partie en haut de chaque réacteur comme décrit dans le brevet WO 2004/036118, permet de minimiser les fuites des solides à travers les séparateurs.

Selon une caractéristique particulière, les parois sont communes. L'emploi de parois communes pour chaque ensemble réacteur, séparateur et cage arrière permet d'obtenir un arrangement aligné et compact.

Selon une autre disposition, la cage arrière des deux types de module ont une paroi commune. Les cages arrières sont juxtaposées entre elles et peuvent avoir des parois communes avec le séparateur ou le réacteur selon la configuration, on peut ainsi conserver des parois tubées faciles à construire et d'installer des ramoneurs de nettoyage de dépôts de poussières sur les tubes avec un espace suffisant tout en minimisant le risque de dépôts solides entre le séparateur adjacent grâce à l'absence de longueur de connexion à parcourir par les fumées.

Selon une autre disposition, le réacteur et le séparateur ont une paroi commune. Le réacteur peut être de forme carrée ou rectangulaire.

Selon une autre disposition, le réacteur et la cage arrière ont une paroi commune. Le lit extérieur peut être situé sous la cage arrière peut ainsi être accolé au réacteur d'oxydation qu'il alimente depuis le siphon correspondant.

Selon une autre disposition, le séparateur et la cage arrière ont une paroi commune.

Selon une caractéristique particulière, les parois communes entre les réacteurs et, entre les séparateurs et les cages arrières sont dédoublées et comportent des ceintures de raidissement dans l'espace entre les doubles parois. Pour les chaudières de très grande taille, au delà de 200MWe, il peut s'avérer nécessaire, non seulement pour des raisons de dilatation thermique de l'ensemble constitué des réacteurs, des séparateurs et des cages arrières mais également en raison de la taille excessive des ceintures de tenue des réacteurs à la pression interne, de dédoubler certaines parois.

Selon une variante, au moins un des modules constitue un réacteur d'oxydation et l'autre un réacteur de conversion. Dans ce cas, les lits fluidisés circulants de chaque chaudière sont interconnectés pour assurer l'échange des oxydes métalliques solides servant de porteurs d'oxygène et qui sont successivement réduits et oxydés en boucles afin de produire un courant concentré de CO₂ et dépourvu de ballast azote. La disposition inversée du réacteur d'oxydation et du réacteur de conversion avec leur séparateur respectif permet de juxtaposer respectivement le séparateur du réacteur d'oxydation avec le réacteur de conversion et le séparateur du réacteur de conversion avec le réacteur d'oxydation. Sous chaque séparateur est disposé un siphon: un siphon à deux sorties sous le séparateur du réacteur de conversion dont une pour assurer le retour direct vers un réacteur de conversion et une pour alimenter en solides le réacteur d'oxydation, et un siphon à deux ou trois sorties sous le réacteur d'oxydation pour assurer le retour direct vers le réacteur d'oxydation et alimenter en solides le réacteur de conversion et les lits extérieurs. La disposition des réacteurs permet d'utiliser des gaines particulièrement courtes et donc d'éviter l'emploi de longues gaines fluidisées faiblement inclinées propices aux défluidisations.

Selon une autre disposition particulière de la variante précédente, le réacteur d'oxydation comprend au moins deux fois plus de modules que le réacteur de conversion. Le principe d'extrapolation en taille est obtenu en conservant un module avec réacteur de conversion et au minimum deux modules avec réacteur d'oxydation, puis en extrapolant la section des réacteurs en taille jusqu'à l'équivalent d'un débit unitaire de 100MWe et en ajoutant des modules alignés typiquement jusqu'à quatre. La structuration en modules élémentaires du réacteur d'oxydation dont la section supérieure est un multiple de celle du réacteur de conversion, multiple de trois ou quatre, abouti à une section de chaque séparateur égale à celle de chaque réacteur. Ainsi le réacteur d'oxydation qui est le plus important, est dans sa partie inférieure d'un seul tenant tandis que la partie supérieure est segmentée par des parois de division tubées dont les tubes participent et sont partie intégrante des gaines d'entrée ou gaine d'accélération des séparateurs et afin de constituer la partie correspondante du module de base.

Selon une disposition particulière de la variante précédente, le réacteur de conversion est placé entre le séparateur et la cage arrière.

Selon une autre variante, au moins un des modules constitue un réacteur d'absorption de CO₂ contenu dans des fumées par carbonatation de CaO et l'autre un réacteur de craquage des carbonates CaCO₃. Dans ce cas, c'est la chaux CaO qui subit des cycles de carbonatation et décarbonatation, l'oxyde de calcium est successivement carbonaté par absorption de CO2 et décarbonaté par craquage.

Ce concept extrêmement intégré permet l'emploi:
- également de lits intérieurs,
- de parois de divisions supérieures complémentaires aux gaines d'entrée du cyclone ou gaines d'accélération ce qui facilite la séparation des solides et l'échange de chaleur à l'intérieur du réacteur d'oxydation,
- de parois refroidies communes combinant l'émulsion eau vapeur et la vapeur faiblement surchauffée
- d'une circulation forcée pour les cycles vapeurs supercritiques ou non.

D'autre part ce concept minimise le poids des parties sous pression grâce aux parois communes et à la réduction de l'épaisseur de la couche de réfractaire d'environ 25 à 50mm sur la périphérie du tube. Les faibles flux thermiques présents dans les réacteurs de conversion et d'oxydation permettent de faire circuler, par exemple, l'émulsion eau vapeur à faible débit massique, tandis que les parois des séparateurs sont parcourues par de la vapeur surchauffée basse température.

L'invention sera mieux comprise à la lecture de la description qui va suivre donnée uniquement à titre d'exemple et faite en se référant aux dessins annexés dans lesquels :
- la figure 1 est une vue de dessus d'un module selon une première variante,
- la figure 2 est une vue de dessus d'un module selon une deuxième variante,
- la figure 3 est une vue de dessus d'une association de modules selon l'invention,
- la figure 4 est une vue schématique d'une installation où l'on installe des modules selon l'invention,
- la figure 5 est une vue schématique d'une seconde variante de l'invention.

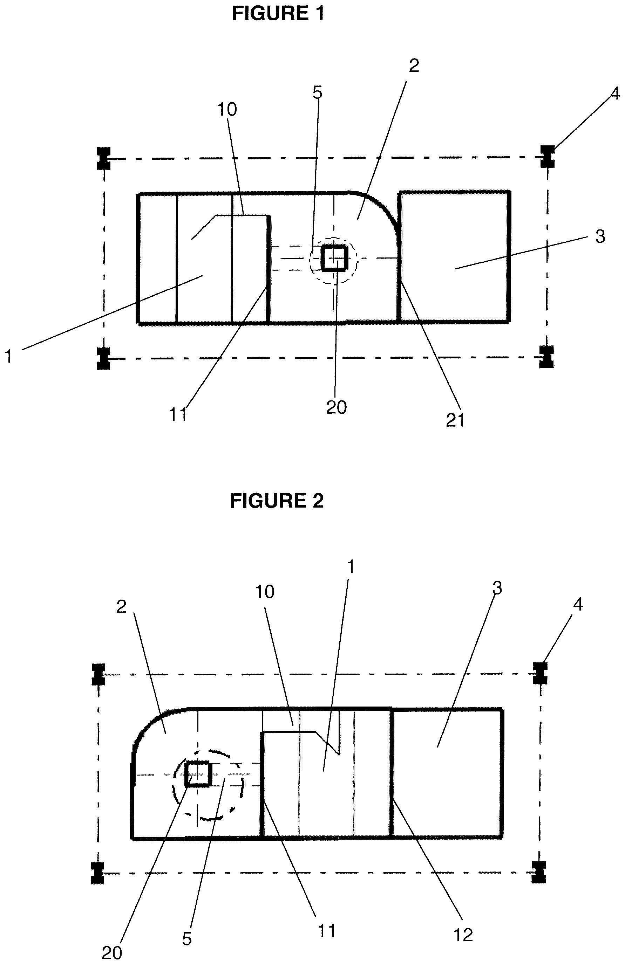

Le module représenté à la figure 1 comprend un réacteur 1, un séparateur 2 placé à côté puis une cage arrière 3, l'ensemble est maintenu par des structures métalliques 4, ce module correspond à celui tel que décrit dans la demande de brevet WO 2004/036118 du demandeur. Le réacteur 1 est relié au séparateur par une gaine 10 partiellement ou totalement intégrée audit réacteur 1. Le réacteur 1 a une paroi commune 11 avec le séparateur 2 et une paroi commune 12 avec la cage arrière 3, ces parois sont tubées et parcourues par un fluide caloporteur. Le séparateur 2 a une sortie 20 des solides reliée à un siphon 5 débouchant sur le réacteur 1. Les fumées passent du séparateur 2 à la cage arrière 3 par une gaine (non représentée). Le bas du foyer 1 comporte une zone avec une grille de fluidisation 40.

Le module de la figure 2 comprend également un réacteur 1, un séparateur 2 et une cage arrière 3, cependant ici le réacteur 1 est placé au centre entre le séparateur 2 et la cage arrière 3. Le séparateur 2 a une paroi commune 11 avec le réacteur 1 et une 21 avec la cage arrière 3. Les solides, comme pour la figure 1, passent par la sortie 20 puis par le siphon 5 puis retournent vers le réacteur 1. Les fumées passent du séparateur 2 à la cage arrière 3 par une gaine (non représentée). Le bas du foyer 1 comporte une zone avec une grille de fluidisation 40.

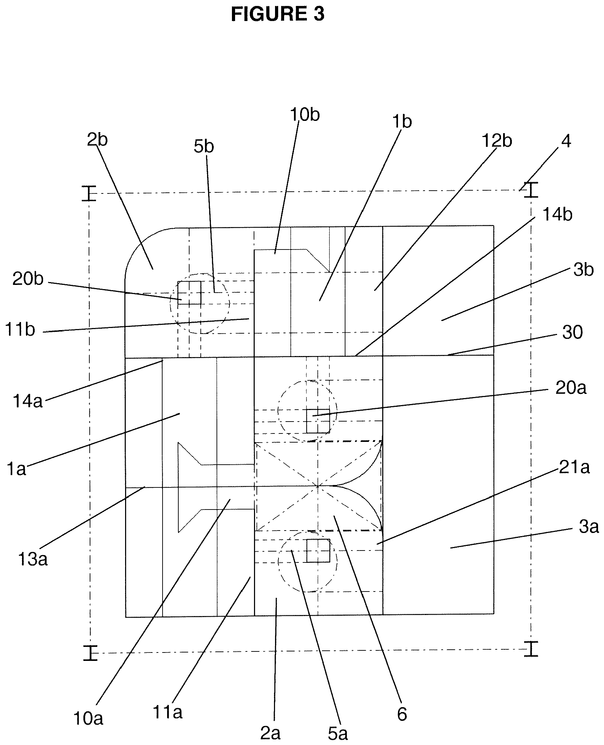

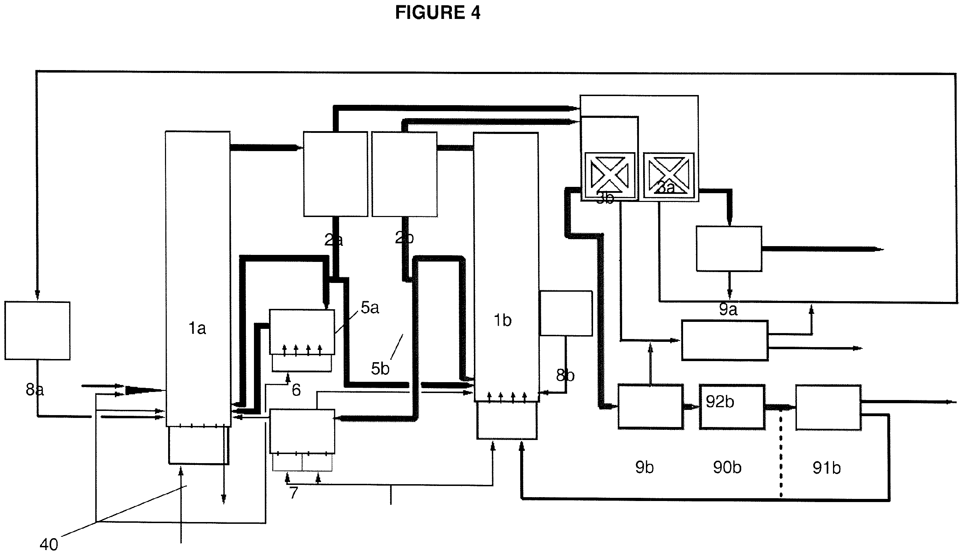

La combinaison des deux types de modules représentés aux figures 1 et 2 est particulièrement bien adaptée pour réaliser une double chaudière à lit fluidisé circulant interconnectée pour la capture de CO₂. Cet exemple de réalisation est représenté aux figures 3 et 4.

La figure 4 représente schématiquement une double chaudière intégrée qui comprend les éléments suivants:
- deux réacteurs à lit fluidisé circulant 1a et 1b dont un réacteur d'oxydation 1a et un réacteur de conversion 1b interconnectés pour assurer l'échange des oxydes métalliques solides servant de porteur d'oxygène et qui sont successivement réduits puis oxydés dans les deux réacteurs 1a et 1b,
- deux séparateurs 2a et 2b,
- deux siphons 5a et 5b situés respectivement sous les séparateurs 2a et 2b,
- un lit extérieur 6 relié au réacteur d'oxydation 1a,
- un séparateur trieur de carbone, dit "carbon stripper", 7 placé sur le retour des solides du réacteur de conversion 1b vers le réacteur d'oxydation 1a,
- deux cages arrières 3a et 3b,
- deux silos 8a et 8b de combustible solide,
- deux filtres 9a et 9b, un ventilateur 90b, un circuit de refroidissement et de condensation 91b et un séparateur de cendres 92b.

Le siphon 5a disposé sous le séparateur 2a est à trois sorties de solides, une pour assurer le retour direct au réacteur d'oxydation 1a, une pour alimenter en solides le réacteur de conversion 1b et une pour alimenter en solides le lit extérieur 6 de contrôle des températures de la boucle.

Le siphon 5b situé sous le séparateur 2b a deux sorties de solides, une pour le retour direct des solides au réacteur de conversion 1b et une pour alimenter en solides le réacteur d'oxydation 1a. Il est également possible de dédier chaque siphon à l'alimentation d'un des lits extérieurs ou à l'alimentation d'un des réacteurs de conversion.

La figure 3 représente la disposition des modules pour réaliser la double chaudière selon l'invention. La double chaudière est structurée en modules élémentaires, ces modules élémentaires sont dimensionnés de telle façon qu'une des dimensions du réacteur de conversion 1b, la largeur ou la longueur, soit égale à la dimension caractéristique, largeur ou longueur, du séparateur 2a. Le nombre de modules élémentaires à utiliser est calculé en fonction de la puissance désirée pour chaque réacteur 1a et 1b. Il faut au moins deux, trois ou quatre fois plus de réacteur 1a d'oxydation que de réacteur 1b de conversion, on obtient donc la disposition selon la figure 3. Le réacteur de conversion 1b est placé entre le séparateur 2b et la cage arrière 3b, il a une paroi commune avec un des séparateurs 2a tandis que le séparateur 2b a une paroi commune avec le réacteur 1a.

Comme on le voit sur la figure 3, le réacteur d'oxydation 1a est composé à partir d'au moins deux modules identiques, il est donc constitué d'au moins deux cellules identiques. Sa section supérieure, soit environ 10m environ au dessus de la grille de fluidisation 30, est segmentée par des parois tubées 13a de division dont les tubes participent et font partie intégrante des gaines d'entrée 10a du séparateur 2a. Sa section inférieure est d'un seul tenant.

Le réacteur de conversion 1b est inversé par rapport au réacteur d'oxydation 1a et leur séparateur respectif 2a et 2b sont juxtaposés respectivement par leurs parois communes 11a et 11b aux réacteurs 1a et 1b et par les parois 14a et 14b aux réacteurs 1a et 1b.

Comme on peut le voir sur les figures 1, 2 et 3 les parois sont sensiblement rectilignes, on peut ainsi avoir des parois communes 11, 12, 13, 14a, 14b, 30 entre les modules élémentaires qui sont alignées. Toutes ces parois sont tubées, ce qui permet d'utiliser du réfractaire en couches minces par exemple environ 25 à 50mm sur la couronne du tube. Le réacteur d'oxydation 1a à caractère exothermique est protégé par des réfractaires en couche mince en partie basse et dans la partie gaine 10a, ainsi que le séparateur 2a et le siphon 5a. Le réacteur de conversion 1b à caractère endothermique est lui protégé sur toute sa hauteur par des réfractaires isolant en couche mince, ainsi que dans la gaine 10b, le séparateur 2b et le siphon 5b.

Les cages arrières 3a sont juxtaposées par des parois communes 21a aux séparateurs 2a et par des parois communes 30 à la cage arrière 3b. La cage arrière 3b a également une paroi commune 12b avec le réacteur de conversion 1b.

Un lit extérieur 6 visible figures 3 et 4, est accolé au réacteur d'oxydation 1a et situé sous les séparateurs 2a, il pourrait également être disposé sous la cage arrière 3a. Il est alimenté à partir du siphon 5a. L'emploi de lit intérieur (non représenté), de parois tubées de divisions supérieures 13a, d'échangeurs internes (non représentés) dans le réacteur d'oxydation 1a permettent de minimiser, si besoin, la taille du lit extérieur et donc de réduire son coût. En effet, la fluidisation interne et les échangeurs de chaleurs internes permettent d'absorber des kilowatts.

Nous allons maintenant décrire sommairement le fonctionnement du dispositif avec double réacteur (oxydation et conversion).

Les deux réacteurs à lit fluidisé circulant, réacteur d'oxydation 1a et réacteur de conversion 1b, sont interconnectés pour assurer l'échange des oxydes métalliques solides servant de porteurs d'oxygène et qui sont successivement réduits et oxydés en boucle. L'oxygène libéré dans le réacteur de conversion 1b assure la combustion sans azote du combustible carboné introduit dans ledit réacteur 1b. Les produits de combustion (CO₂, SO₂, H₂O) issus du réacteur de conversion 1b fluidisé par du CO₂/ SO₂/ H₂O recyclés, sont chargés en solides qui sont séparés dans le séparateur 2b et réintroduits à la base du réacteur 1a via un siphon 5b. Puis ces produits de combustion sont refroidis dans une cage arrière 3b, dépoussiérés et transférés vers un train de compression CO₂ pour stockage ultérieur.

Les oxydes métalliques solides, à l'état réduit sortant du réacteur de conversion 1b, sont alors transférés vers le réacteur d'oxydation 1a après avoir subi une étape de "carbon stripper" ou séparateur de carbone 7.

Le réacteur d'oxydation 1a, est fluidisé en air qui réagit avec les oxydes et les transporte vers le haut du réacteur d'oxydation 1 a où cet air, appauvri en oxygène, est chargé en solides qui sont séparés dans le séparateur 2a et réintroduits à la base du réacteur 1a via un siphon 5a. Puis cet air appauvri en oxygène et dépourvu de CO2 est refroidi dans une cage arrière 3a, dépoussiéré et rejeté à l'atmosphère par une cheminée conventionnelle.

Pour les chaudières de très grande taille, au delà de 200MWe, il peut s'avérer nécessaire, non seulement pour des raisons de dilatation thermique de l'ensemble constitué des réacteurs, des séparateurs et des cages arrières mais également en raison de la taille excessive des ceintures de tenue des réacteurs à la pression interne, de dédoubler certaines parois comme par exemple sur la figure 3, la paroi 12 b et les parois 30, 14 b et 14 a. L'arrangement global est peu modifié par cet écartement inter parois d'environ 800 mm.

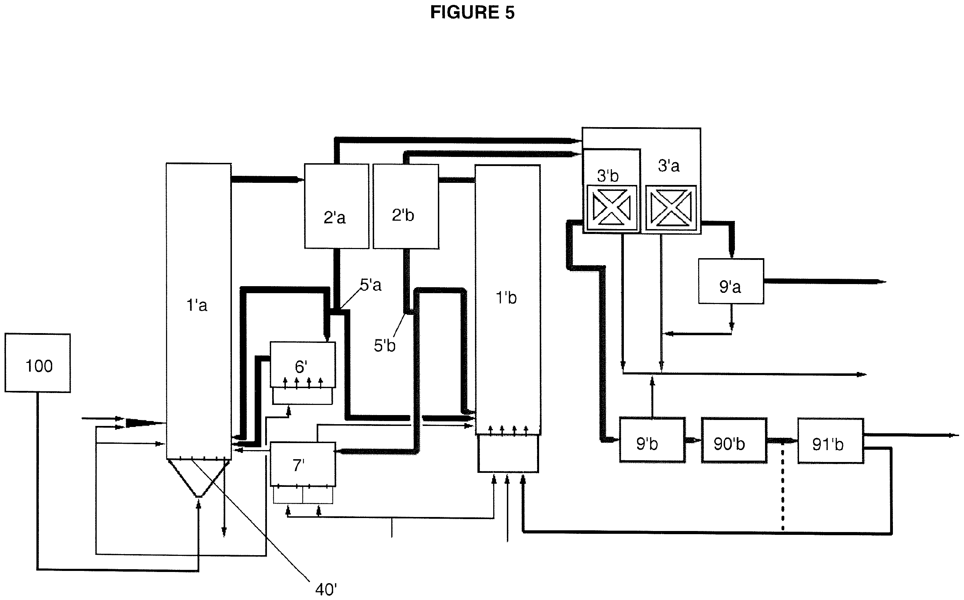

Comme on peut le voir figure 5, il est possible d'utiliser l'invention pour réaliser un autre type de procédé de capture de CO₂ selon brevet FR 2 814 533 du demandeur, et qui peut être mis en oeuvre à 650 °C environ sur un courant de fumées issues d'un foyer de chaudière 100. Pour simplifier les mêmes éléments reprendront les mêmes références avec un indice "prime".

En effet, dans ce cas, le réacteur 1'a est utilisé comme absorbeur de CO₂ contenus dans les fumées, de la chaux CaO carbonatée par l'absorption de CO₂ remplace les oxydes métalliques porteurs d'oxygène de l'exemple précédent. Les solides extraits du réacteur 1'a (CaO, CaCO₃, CaSO₄) sont transférés vers le réacteur 1'b dans lequel est effectué le craquage des carbonates formés, le CO₂ relâché est également refroidi, filtré puis comprimé. Le CaO craqué dans le réacteur 1'b est renvoyé vers le réacteur 1'a pour une nouvelle capture CO₂, après un refroidissement vers 600 °C dans le lit 7'.

De façon plus détaillée, les deux réacteurs à lit fluidisé circulant, le réacteur d'absorption 1'a et le réacteur de craquage 1'b, sont interconnectés pour assurer l'échange des composés calcium servant de porteurs de carbonates et qui sont successivement carbonatés et craqués en boucle par élévation de température à 900°C dans le réacteur 1'a via une injection de combustibles et d'oxygène dilué dans du CO₂. Les produits de combustion (CO₂, SO₂, H₂O) issus du réacteur de conversion 1'b fluidisé par un mélange O₂ et CO₂/ SO₂/ H₂O recyclés, sont chargés en solides qui sont séparés dans le séparateur 2'b et réintroduits à la base du réacteur 1'a via un siphon 5'b. Puis ces produits de combustion sont refroidis dans une cage arrière 3'b, dépoussiérés et transférés vers un train de compression CO₂ pour stockage ultérieur.

Les composés calcium, à l'état CaO, sortant du réacteur de conversion 1'b, sont alors transférés vers le réacteur d'absorption 1'a après avoir subi une étape de refroidissement de 900°C à 600 °C environ dans un lit de refroidissement 7'.

Le réacteur d'absorption 1'a, est fluidisé par les fumées à traiter contenant du CO₂ qui réagit avec les composés calcium, qui les transporte vers le haut du réacteur d'absorption 1'a. Ces fumées, appauvries en CO₂, sont chargées en solides qui sont séparés dans le séparateur 2'a et réintroduits à la base du réacteur 1'a via un siphon 5'a. Puis ces fumées appauvries en CO₂ sont refroidies dans une cage arrière 3'a, dépoussiérées et rejetées à l'atmosphère par une cheminée conventionnelle.

## Revendications

1. Réacteur à lit fluidisé circulant, comprenant au moins un module de base qui est constitué d'une chambre de réaction (1, 1a, 1b), d'un séparateur centrifuge (2, 2a, 2b) et d'une cage arrière (3, 3a, 3b) et dans lequel la chambre de réaction (1, 1a, 1b) est reliée par une gaine d'accélération (10, 10a, 10b) au séparateur (2, 2a, 2b) pour séparer des particules à partir de gaz chauds venant de cette chambre de réaction (1, 1a, 1b), le réacteur à lit fluidisé circulant étant constitué d'au moins deux modules dont un premier, dans lequel la chambre de réaction (1b) est placée entre le séparateur (2b) et la cage arrière (3b), et un deuxième dans lequel le séparateur (2a) est placé entre la chambre de réaction (1a) et la cage arrière (3a), **caractérisé en ce que** le séparateur (2b, 2a) de chacun des premier et deuxième modules est positionné à côté de la chambre de réaction (1a, 1b) de l'autre module.

2. Réacteur à lit fluidisé circulant selon la revendication 1, **caractérisé en ce que** pour chacun des premier et deuxième modules, la gaine d'accélération (10, 10a, 10b) est disposée au moins en partie dans le haut de la chambre de réaction (1, 1a, 1b) et le séparateur centrifuge (2, 2a, 2b) présente des parois verticales sensiblement rectilignes.

3. Réacteur à lit fluidisé circulant selon une des revendications précédentes, **caractérisé en ce que** la chambre de réaction (1b) du premier module et le séparateur (2a) du deuxième module ont une paroi commune (14b), et le séparateur (2b) du premier module et la chambre de réaction (1a) du deuxième module ont une paroi commune (14a).

4. Réacteur à lit fluidisé circulant selon une des revendications précédentes, **caractérisé en ce que** les cages arrière (2, 2a, 2b) respectives des premier et deuxième modules ont une paroi commune (30).

5. Réacteur à lit fluidisé circulant selon une des revendications précédentes, **caractérisé en ce que** pour chacun des premier et deuxième modules, la chambre de réaction (1, 1a, 1b) et le séparateur (2, 2a, 2b) ont une paroi commune (11, 11a, 11b).

6. Réacteur à lit fluidisé circulant selon une des revendications précédentes, **caractérisé en ce que** la chambre de réaction (1b) et la cage arrière (3b) du premier module ont une paroi commune (12b).

7. Réacteur à lit fluidisé circulant selon une des revendications précédentes, **caractérisé en ce que** le séparateur (2a) et la cage arrière (3a) du deuxième module ont une paroi commune (21a).

8. Réacteur à lit fluidisé circulant selon une des revendications 2 à 7, **caractérisé en ce que** la ou les parois communes (11a, 11b, 12b, 14a, 14b, 21a) sont tubées.

9. Réacteur à lit fluidisé circulant selon une des revendications 2 à 7, **caractérisé en ce que** la ou les parois communes (11a, 11b, 12b, 14a, 14b, 21b) sont dédoublées et comportent des ceintures de raidissement dans l'espace entre les doubles parois.

10. Réacteur à lit fluidisé circulant selon une des revendications précédentes, **caractérisé en ce qu'**un des premier et deuxième modules constitue un réacteur d'oxydation et l'autre un réacteur de conversion.

11. Réacteur à lit fluidisé circulant selon la revendication 10, **caractérisé en ce que** la chambre de réaction (1a) du réacteur d'oxydation comprend au moins deux fois plus de cellules identiques que la chambre de réaction (1b) du réacteur de conversion.

12. Réacteur à lit fluidisé circulant selon une des revendications 9 à 10, **caractérisé en ce que** le réacteur de conversion (1b) est le premier module.

13. Réacteur à lit fluidisé circulant selon une des revendications précédentes, **caractérisé en ce qu'**un des premier et deuxième modules constitue un réacteur d'absorption de CO₂ contenu dans des fumées par carbonatation de CaO et l'autre un réacteur de craquage des carbonates CaCO₃.

14. Réacteur à lit fluidisé circulant selon une des revendications précédentes, **caractérisé en ce que** le séparateur (2b, 2a) de chacun des premier et deuxième modules est adapté pour faire passer des particules de la chambre de réaction (1b, 1a) de l'un des premier et deuxième modules à la chambre de réaction de l'autre module.

15. Réacteur à lit fluidisé circulant selon une des revendications précédentes, **caractérisé en ce que** le séparateur (2b, 2a) de chacun des premier et deuxième modules est pourvu d'un siphon (5b, 5a) ayant au moins deux sorties dont une sortie de retour direct vers la chambre de réaction (1b, 1a) du module correspondant et une sortie d'alimentation de la chambre de réaction (1a, 1b) de l'autre module.

## Patentansprüche

1. Reaktor mit zirkulierendem Wirbelbett, welcher wenigstens ein Basismodul umfasst, das aus einer Reaktionskammer (1, 1a, 1b), einem Fliehkraftabscheider (2, 2a, 2b) und einem hinteren Käfig (3, 3a, 3b) besteht und in welchem die Reaktionskammer (1, 1a, 1b) durch einen Beschleunigungskanal (10, 10a, 10b) mit dem Abscheider (2, 2a, 2b) verbunden ist, um Partikel aus heißen Gasen, die aus dieser Reaktionskammer (1, 1a, 1b) kommen, abzuscheiden, wobei der Reaktor mit zirkulierendem Wirbelbett aus wenigstens zwei Modulen besteht, darunter einem ersten, in welchem die Reaktionskammer (1b) zwischen dem Abscheider (2b) und dem hinteren Käfig (3b) angeordnet ist, und einem zweiten, in welchem der Abscheider (2a) zwischen der Reaktionskammer (1a) und dem hinteren Käfig (3a) angeordnet ist, **dadurch gekennzeichnet, dass** der Abscheider (2b, 2a) sowohl des ersten als auch des zweiten Moduls neben der Reaktionskammer (1a, 1b) des anderen Moduls positioniert ist.

2. Reaktor mit zirkulierendem Wirbelbett nach Anspruch 1, **dadurch gekennzeichnet, dass** sowohl für das erste als auch das zweite Modul der Beschleunigungskanal (10, 10a, 10b) wenigstens teilweise im oberen Bereich der Reaktionskammer (1, 1a, 1b) angeordnet ist und der Fliehkraftabscheider (2, 2a, 2b) vertikale Wände aufweist, die im Wesentlichen geradlinig sind.

3. Reaktor mit zirkulierendem Wirbelbett nach einem der vorhergehenden Ansprüche, **dadurch gekennzeichnet, dass** die Reaktionskammer (1b) des ersten Moduls und der Abscheider (2a) des zweiten Moduls eine gemeinsame Wand (14b) aufweisen und der Abscheider (2b) des ersten Moduls und die Reaktionskammer (1a) des zweiten Moduls eine gemeinsame Wand (14a) aufweisen.

4. Reaktor mit zirkulierendem Wirbelbett nach einem der vorhergehenden Ansprüche, **dadurch gekennzeichnet, dass** die hinteren Käfige (2, 2a, 2b) des ersten bzw. zweiten Moduls eine gemeinsame Wand (30) aufweisen.

5. Reaktor mit zirkulierendem Wirbelbett nach einem der vorhergehenden Ansprüche, **dadurch gekennzeichnet, dass** sowohl für das erste als auch das zweite Modul die Reaktionskammer (1, 1a, 1b) und der Abscheider (2, 2a, 2b) eine gemeinsame Wand (11, 11a, 11b) aufweisen.

6. Reaktor mit zirkulierendem Wirbelbett nach einem der vorhergehenden Ansprüche, **dadurch gekennzeichnet, dass** die Reaktionskammer (1b) und der hintere Käfig (3b) des ersten Moduls eine gemeinsame Wand (12b) aufweisen.

7. Reaktor mit zirkulierendem Wirbelbett nach einem der vorhergehenden Ansprüche, **dadurch gekennzeichnet, dass** der Abscheider (2a) und der hintere Käfig (3a) des zweiten Moduls eine gemeinsame Wand (21a) aufweisen.

8. Reaktor mit zirkulierendem Wirbelbett nach einem der Ansprüche 2 bis 7, **dadurch gekennzeichnet, dass** die gemeinsame Wand oder die gemeinsamen Wände (11a, 11b, 12b, 14a, 14b, 21a) mit Rohren versehen sind.

9. Reaktor mit zirkulierendem Wirbelbett nach einem der Ansprüche 2 bis 7, **dadurch gekennzeichnet, dass** die gemeinsame Wand oder die gemeinsamen Wände (11a, 11b, 12b, 14a, 14b, 21b) zweigeteilt ausgeführt sind und in dem Raum zwischen den doppelten Wänden Versteifungsgürtel aufweisen.

10. Reaktor mit zirkulierendem Wirbelbett nach einem der vorhergehenden Ansprüche, **dadurch gekennzeichnet, dass** eines von dem ersten und dem zweiten Modul einen Oxidationsreaktor und das andere einen Umwandlungsreaktor darstellt.

11. Reaktor mit zirkulierendem Wirbelbett nach Anspruch 10, **dadurch gekennzeichnet, dass** die Reaktionskammer (1a) des Oxidationsreaktors wenigstens doppelt so viele identische Zellen wie die Reaktionskammer (1b) des Umwandlungsreaktors umfasst.

12. Reaktor mit zirkulierendem Wirbelbett nach einem der Ansprüche 9 bis 10, **dadurch gekennzeichnet, dass** der Umwandlungsreaktor (1b) das erste Modul ist.

13. Reaktor mit zirkulierendem Wirbelbett nach einem der vorhergehenden Ansprüche, **dadurch gekennzeichnet, dass** eines von dem ersten und dem zweiten Modul einen Reaktor zur Absorption von in Rauchgasen enthaltenem CO₂ durch Karbonatisierung von CaO und das andere einen Reaktor zum Kracken der Karbonate CaCO₃ darstellt.

14. Reaktor mit zirkulierendem Wirbelbett nach einem der vorhergehenden Ansprüche, **dadurch gekennzeichnet, dass** der Abscheider (2b, 2a) sowohl des ersten als auch des zweiten Moduls dafür ausgelegt ist, Partikel aus der Reaktionskammer (1b, 1a) des einen von dem ersten und dem zweiten Modul in die Reaktionskammer des anderen Moduls gelangen zu lassen.

15. Reaktor mit zirkulierendem Wirbelbett nach einem der vorhergehenden Ansprüche, **dadurch gekennzeichnet, dass** der Abscheider (2b, 2a) sowohl des ersten als auch des zweiten Moduls mit einem Siphon (5b, 5a) versehen ist, der wenigstens zwei Ausgänge aufweist, darunter einen Ausgang zur direkten Rückführung zu der Reaktionskammer (1b, 1a) des entsprechenden Moduls und einen Ausgang zur Einführung in die Reaktionskammer (1a, 1b) des anderen Moduls.

## Claims

1. Circulating fluidized bed reactor comprising at least one base module which is made up of a reaction chamber (1, 1a, 1b), of a centrifugal separator (2, 2a, 2b) and of a rear cage (3, 3a, 3b) and in which the reaction chamber (1, 1a, 1b) is connected by an acceleration duct (10, 10a, 10b) to the separator (2, 2a, 2b) for separating particles from hot gases coming from this reaction chamber (1, 1a, 1b), the circulating fluidized bed reactor being made up of at least two modules including a first, in which the reaction chamber (1b) is positioned between the separator (2b) and the rear cage (3b), and a second in which the separator (2a) is positioned between the reaction chamber (1a) and the rear cage (3a), **characterized in that** the separator (2b, 2a) of each of the first and second modules is positioned next to the reaction chamber (1a, 1b) of the other module.

2. Circulating fluidized bed reactor according to Claim 1, **characterized in that** for each of the first and second modules, the acceleration duct (10, 10a, 10b) is arranged at least partially in the top of the reaction chamber (1, 1a, 1b) and the centrifugal separator (2, 2a, 2b) has substantially straight vertical walls.

3. Circulating fluidized bed reactor according to one of the preceding claims, **characterized in that** the reaction chamber (1b) of the first module and the separator (2a) of the second module have a wall (14b) in common, and the separator (2b) of the first module and the reaction chamber (1a) of the second module have a wall (14a) in common.

4. Circulating fluidized bed reactor according to one of the preceding claims, **characterized in that** the respective rear cages (2, 2a, 2b) of the first and second modules have a wall (30) in common.

5. Circulating fluidized bed reactor according to one of the preceding claims, **characterized in that** for each of the first and second modules, the reaction chamber (1, 1a, 1b) and the separator (2, 2a, 2b) have a wall (11, 11a, 11b) in common.

6. Circulating fluidized bed reactor according to one of the preceding claims, **characterized in that** the reaction chamber (1b) and the rear cage (3b) of the first module have a wall (12b) in common.

7. Circulating fluidized bed reactor according to one of the preceding claims, **characterized in that** the separator (2a) and the rear cage (3a) of the second module have a wall (21a) in common.

8. Circulating fluidized bed reactor according to one of Claims 2 to 7, **characterized in that** the wall or walls (11a, 11b, 12b, 14a, 14b, 21a) in common are cased.

9. Circulating fluidized bed reactor according to one of Claims 2 to 7, **characterized in that** the wall or walls (11a, 11b, 12b, 14a, 14b, 21b) in common are duplicated and comprise stiffening belts in the space between the double walls.

10. Circulating fluidized bed reactor according to one of the preceding claims, **characterized in that** one of the first and second modules constitutes an oxidation reactor and the other a conversion reactor.

11. Circulating fluidized bed reactor according to Claim 10, **characterized in that** the reaction chamber (1a) of the oxidation reactor comprises at least twice as many identical cells as the reaction chamber (1b) of the conversion reactor.

12. Circulating fluidized bed reactor according to one of Claims 9 and 10, **characterized in that** the conversion reactor (1b) is the first module.

13. Circulating fluidized bed reactor according to one of the preceding claims, **characterized in that** one of the first and second modules constitutes a reactor for absorbing CO₂ contained in flue gases through the carbonation of CaO, and the other constitutes a reactor for cracking the carbonates CaCO₃.

14. Circulating fluidized bed reactor according to one of the preceding claims, **characterized in that** the separator (2b, 2a) of each of the first and second modules is designed to pass particles from the reaction chamber (1b, 1a) of one of the first and second modules to the reaction chamber of the other module.

15. Circulating fluidized bed reactor according to one of the preceding claims, **characterized in that** the separator (2b, 2a) of each of the first and second modules is provided with a siphon (5b, 5a) having at least two outlets, one of them being a direct return outlet leading directly to the reaction chamber (1b, 1a) of the corresponding module and one being a feed outlet feeding the reaction chamber (1a, 1b) of the other module.
